# EUROPEAN PATENT APPLICATION

(11) **EP 3 422 273 A1**
(43) Date of publication of application: **02.01.2019**
(21) Application number: 17770639.7
(22) Date of filing: 23.03.2017
(51) Int. Cl.: G06Q 20/04, G06Q 20/08, G07G 1/14, G06Q 20/40, H04L 9/32, G06Q 20/38, H04W 4/00

(54) **ELECTRONIC DEVICE AND METHOD FOR PROVIDING PAYMENT INFORMATION**

(30) Priority: 23.03.2016 KR 20160034851
(71) Applicant: Samsung Electronics Co., Ltd., Suwon-si, Gyeonggi-do 16677 (KR)
(72) Inventor: KIM, Byoung-Joo, Gyeonggi-do, 16677 (KR); Park, Tae-Gun, Gyeonggi-do, 16677 (KR)
(74) Representative: Nederlandsch Octrooibureau
(86) International application number: PCT/KR2017/003134
(87) International publication number: WO 2017/164669

(57) **Abstract**

The present invention relates to a method for providing payment information, for example, to a device for providing payment information by using a sensor, and a method therefor. To this end, an electronic device, of the present invention, comprising a first communication circuit, a second communication circuit, a sensor, and a processor, can comprise the operations of: receiving a user input by using the sensor; performing authentication on the user input; receiving payment information from an external electronic device by using the first communication circuit when the authentication has been successful; and outputting the payment information through the second communication circuit when a complete event for the user input has been received from the sensor by using the processor.

## Description

### [Technical Field]

The present disclosure relates to a method for providing payment information, for example, an apparatus and method for providing payment information by using a sensor.

### [Background Art]

Recently, various services and additional functions provided in electronic devices have expanded gradually. To improve the utility value of electronic devices and meet various demands of users, communication service providers or electronic device manufacturers are competitively developing electronic devices to provide various functions and to differentiate their devices from other companies' devices.

The electronic device may also store a payment means(e.g., card information) for providing a payment service, and a user may make payment based on the stored card information. For example, when the user desires to make payment by using an electronic device, upon selection of a card stored in the electronic device, the electronic device may make a payment by outputting magnetic secure transmission (MST).

### [Detailed Description of the Invention]

### [Technical Problem]

As the user is not able to determine an MST output timing of the electronic device, battery consumption of the electronic device is increased due to long-time MST output.

Various embodiments of the present disclosure determine a timing to output payment information through a communication circuit (e.g., MST) by using a sensor.

### [Technical Solution]

Various embodiments of the present disclosure allow a user to determine payment information for payment by an electronic device providing a payment service and provide a payment service through various biometric information of the user as well as user's fingerprints or through at least one sensor provided in the electronic device.

To this end, according to various embodiments of the present disclosure, an electronic device includes a sensor, a first communication circuit, a second communication circuit, and a processor, in which the processor is configured to receive a user input by using the sensor, to perform authentication with respect to the user input, to receive payment information from an external electronic device by using the first communication circuit, when the authentication is successful, and to output the payment information through the second communication circuit, upon receiving a completion event with respect to the user input from the sensor.

According to various embodiments of the present disclosure, a method for an electronic device including a first communication circuit, a second communication circuit, a sensor, and a processor includes receiving a user input by using the sensor, performing authentication with respect to the user input, receiving payment information from an external electronic device by using the first communication circuit, when the authentication is successful, and outputting the payment information through the second communication circuit, upon receiving a completion event with respect to the user input from the sensor, by using the processor.

### [Advantageous Effects]

According to various embodiments of the present disclosure, a user determines output of payment information of an electronic device, such that the user may be provided with convenience.

Moreover, the present disclosure performs authentication by sensing a user's input with at least one sensor, receives payment information from an external electronic device, and outputs the payment information through a second communication circuit upon sensing a completion event with respect to the user input, thereby reducing battery consumption of the electronic device.

Furthermore, the present disclosure receives an input from a user through various biometric information of the user as well as fingerprints of the user or through at least one sensor of the electronic device and receives the completion event with respect to the user input, thereby providing convenience meeting user's demands.

### [Brief Description of Drawings]

FIG. 1 illustrates an electronic device in a network environment according to various embodiments of the present disclosure.
FIG. 2 is a block diagram of an electronic device according to various embodiments of the present disclosure.
FIG. 3 is a block diagram of a programming module according to various embodiments.
FIG. 4 is a block diagram of an electronic device for providing a payment service according to various embodiments of the present disclosure.
FIG. 5 is a flowchart illustrating a payment procedure in a payment system according to various embodiments of the present disclosure.
FIG. 6 is a flowchart illustrating a payment procedure in an electronic device according to various embodiments of the present disclosure.
FIG. 7 is a flowchart illustrating a payment procedure using biometric information in an electronic device according to various embodiments of the present disclosure.
   (a) of FIG. 8 is an exemplary diagram showing a card to be used for payment according to an embodiment of the present disclosure.
   (b) of FIG. 8 is an exemplary diagram showing input of biometric information according to an embodiment of the present disclosure.
   (c) of FIG. 8 is an exemplary diagram showing occurrence of a completion event with respect to input of biometric information according to an embodiment of the present disclosure.
   (d) of FIG. 8 is an exemplary diagram showing a pop-up indicating output of payment information corresponding to a completion event according to an embodiment of the present disclosure.
   (e) of FIG. 8 is an exemplary diagram showing that an electronic device does not contact a second external electronic device (e.g., a card reader) according to an embodiment of the present disclosure.

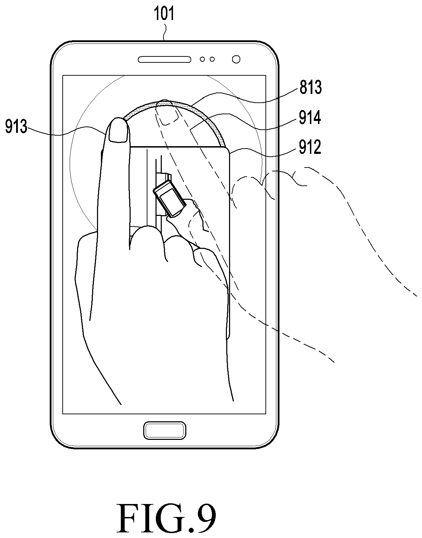

FIG. 9 is an exemplary diagram showing control of a timer after sensing of a completion event according to an embodiment of the present disclosure.

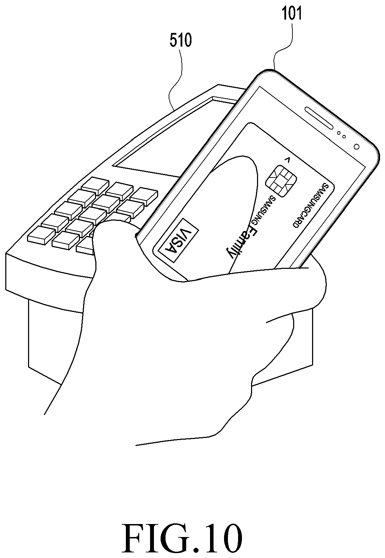

FIG. 10 is an exemplary diagram showing that an electronic device does not contact a second external electronic device (e.g., a card reader) according to an embodiment of the present disclosure.

### [Mode for Carrying out the Invention]

Hereinafter, various embodiments of the present disclosure will be disclosed with reference to the accompanying drawings. However, it should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements.

In the present disclosure, an expression such as "having," "may have," "comprising," or "may comprise" indicates existence of a corresponding characteristic (e.g., a numerical value, a function, an operation, or an element like a part) and does not exclude existence of additional characteristic.

As used herein, each of such phrases as "A or B," "at least one of A or/and B," "at least one or more of A or/and B," and so forth may include all possible combinations of the items enumerated together in a corresponding one of the phrases. For example, "A or B," "at least one of A and B," or "one or more of A or B" may indicate the entire of (1) including at least one A, (2) including at least one B, or (3) including both at least one A and at least one B.

Expressions such as "first," "second," "primarily," or "secondary," used herein may represent various elements regardless of order and/or importance and do not limit corresponding elements. For example, a first user device and a second user device may represent different user devices regardless of order or importance. For example, a first element may be named as a second element without departing from the right scope of the various exemplary embodiments of the present disclosure, and similarly, a second element may be named as a first element.

When it is described that an element (such as a first element) is "operatively or communicatively coupled with/to" or "connected" to another element (such as a second element), the element can be directly connected to the other element or can be connected to the other element through another element (e.g., a third element). However, when it is described that an element (such as a first element) is "directly connected" or "directly coupled" to another element (such as a second element), it means that there is no intermediate element (such as a third element) between the element and the other element.

An expression "configured to (or set)" used in the present disclosure may be replaced with, for example, "suitable for," "having the capacity to," "designed to," "adapted to," "made to," or "capable of" according to a situation. A term "configured to (or set)" does not always mean only "specifically designed to" by hardware. Alternatively, in some situation, an expression "apparatus configured to" may mean that the apparatus "can" operate together with another apparatus or component. For example, a phrase "a processor configured (or set) to perform A, B, and C" may be a dedicated processor (e.g., an embedded processor) for performing a corresponding operation or a generic-purpose processor (such as a central processing unit (CPU) or an application processor) that can perform a corresponding operation by executing at least one software program stored at a memory device. A term "configured to (or set)" does not always mean only "specifically designed to" by hardware.

Terms defined in the present disclosure are used for only describing a specific exemplary embodiment and may not have an intention to limit the scope of other exemplary embodiments. The singular forms are intended to include the plural forms as well, unless the context clearly indicates otherwise. All of the terms used herein including technical or scientific terms have the same meanings as those generally understood by an ordinary skilled person in the related art. The terms defined in a generally used dictionary should be interpreted as having meanings that are the same as or similar with the contextual meanings of the relevant technology and should not be interpreted as having ideal or exaggerated meanings unless they are clearly defined in the various exemplary embodiments. In some case, terms defined in the present disclosure cannot be analyzed to exclude the present exemplary embodiments.

An electronic device according to various embodiments of the present disclosure may include at least one of, for example, a smartphone, a tablet personal computer (PC), a mobile phone, a video phone, an electronic-book (e-book) reader, a desktop PC, a laptop PC, a netbook computer, a workstation, a server, a personal digital assistant (PDA), a portable multimedia player (PMP), an MP3 player, a mobile medical equipment, a camera, and a wearable device. According to various embodiments, examples of the wearable device may include at least one of an accessory type (e.g., a watch, a ring, a bracelet, an anklet, a necklace, glasses, contact lenses, head-mounted device (HMD), etc.), a fabric or cloth-integrated type (e.g., electronic clothing, etc.), a body-attached type (e.g., a skin pad, a tattoo, etc.), a body implanted type (e.g., an implantable circuit, etc.), and so forth.

According to some embodiments, the electronic device may be a home appliance. The home appliance may include, for example, a television (TV), a digital video disk (DVD) player, audio equipment, a refrigerator, an air conditioner, a vacuum cleaner, an oven, a microwave oven, a laundry machine, an air cleaner, a set-top box, a home automation control panel, a security control panel, a TV box (e.g., Samsung HomeSync™, Apple TV™, or Google TV™), a game console (e.g., Xbox™, PlayStation™, etc.), an electronic dictionary, an electronic key, a camcorder, a charging device, or an electronic frame.

According to other embodiments of the present disclosure, the electronic device may include at least one of various medical equipment (for example, magnetic resonance angiography (MRA), magnetic resonance imaging (MRI), computed tomography (CT), an imaging device, or an ultrasonic device), a navigation system, a global navigation satellite system (GNSS), an event data recorder (EDR), a flight data recorder (FDR), a vehicle infotainment device, electronic equipment for ships (e.g., a navigation system and gyro compass for ships), avionics, a security device, a vehicle head unit, an industrial or home robot, an automatic teller's machine (ATM), a point of sales (POS), Internet of things (e.g., electric bulbs, various sensors, electricity or gas meters, sprinkler devices, fire alarm devices, thermostats, streetlights, toasters, exercise machines, hot-water tanks, heaters, boilers, and so forth).

According to some embodiments, the electronic device may include a part of a furniture or building/structure, an electronic board, an electronic signature receiving device, a projector, and various measuring instruments (e.g., a water, electricity, gas, electric wave measuring device, etc.). The electronic device according to various embodiments of the present disclosure may be one of the above-listed devices or a combination thereof. The electronic device according to some embodiments may be a flexible electronic device. The electronic device according to various embodiments of the present disclosure is not limited to the above-listed devices and may include new electronic devices according to technical development.

Hereinafter, an electronic device according to various embodiments of the present disclosure will be described with reference to the accompanying drawings. Herein, the term "user" used in various embodiments of the present disclosure may refer to a person who uses the electronic device or a device using the electronic device.

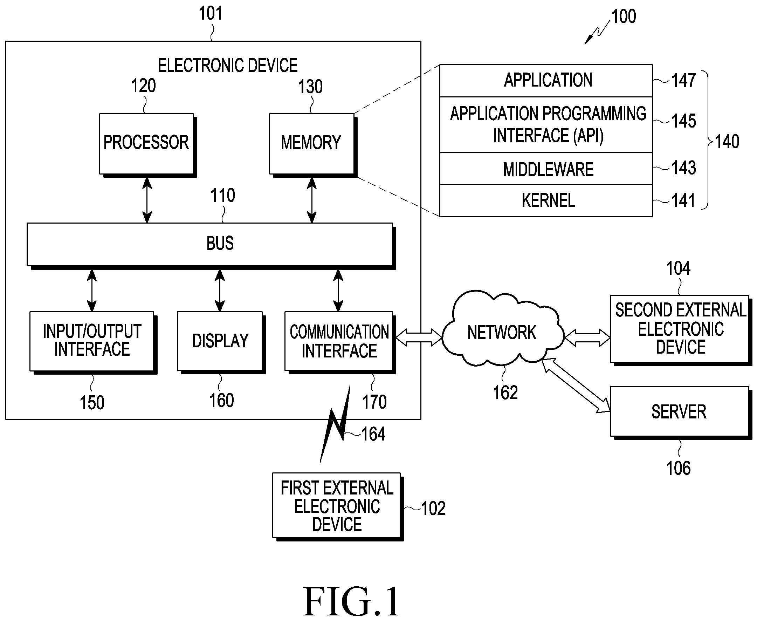

FIG. 1 illustrates an electronic device in a network environment according to various embodiments of the present disclosure;

The electronic device 101 may include a bus 110, a processor 120, a memory 130, an input/output (I/O) interface 150, a display 160, and a communication interface 170. According to some embodiments, the electronic device 101 may omit at least one of the foregoing elements or may further include other elements.

The bus 110 may include a circuit for connecting, e.g., the elements 110 to 170 and delivering communication (e.g., a control message and/or data) between the elements 110 to 170.

The processor 120 may include one or more of a central processing unit (CPU), an application processor (AP), and a communication processor (CP). The processor 120 performs operations or data processing for control and/or communication of, for example, at least one other elements of the electronic device 101.

The memory 130 may include a volatile and/or nonvolatile memory. The memory 130 may store, for example, instructions or data associated with at least one other elements of the electronic device 101. According to an embodiment of the present disclosure, the memory 130 may store software and/or a program 140. The program 140 may include at least one of, for example, a kernel 141, middleware 143, an application programming interface (API) 145, and/or an application program (or "application") 147, and the like. At least some of the kernel 141, the middleware 143, and the API 145 may be referred to as an operating system (OS).

The kernel 141 may control or manage, for example, system resources (e.g., the bus 110, the processor 120, the memory 130, etc.) used to execute operations or functions implemented in other programs (e.g., the middleware 143, the API 145, or the application program 147). The kernel 141 provides an interface through which the middleware 143, the API 145, or the application program 147 accesses separate components of the electronic device 101 to control or manage the system resources.

The middleware 143 may work as an intermediary for allowing, for example, the API 145 or the application program 147 to exchange data in communication with the kernel 141.

In addition, the middleware 143 may process one or more task requests received from the application program 147 based on priorities. For example, the middleware 143 may give a priority for using a system resource (e.g., the bus 110, the processor 120, the memory 130, etc.) of the electronic device 101 to at least one of the application programs 147. For example, the middleware 143 may perform scheduling or load balancing with respect to the one or more task requests by processing the one or more task requests based on the priority given to the at least one of the application programs 147.

The API 145 is an interface used for the application 147 to control a function provided by the kernel 141 or the middleware 143, and may include, for example, at least one interface or function (e.g., a command) for file control, window control, image processing or character control.

The I/O interface 150 serves as an interface for delivering, for example, a command or data input from a user or another external device to other component(s) of the electronic device 101. The I/O interface 150 may also output a command or data received from other component(s) of the electronic device 101 to a user or another external device.

The display 160 may include, for example, a liquid crystal display (LCD), a light emitting diode (LED) display, an organic light emitting diode (OLED) display, a microelectromechanical system (MEMS) display, or an electronic paper display. The display 160 may, for example, display various contents (e.g., a text, an image, video, an icon, a symbol, etc.) to users. The display 160 may include a touch screen, and receives a touch, a gesture, proximity, or a hovering input, for example, by using an electronic pen or a part of a body of a user.

The communication interface 170 establishes communication between the electronic device 101 and an external device (e.g., a first external electronic device 102, a second external electronic device 104, or a server 106). For example, the communication interface 170 may be connected to a network 162 through wireless communication or wired communication to communicate with an external device (e.g., the second external electronic device 104 or the server 106).

The wireless communication may use, as a cellular communication protocol, for example, at least one of Long Term Evolution (LTE), LTE-Advanced (LTE-A), Code Division Multiple Access (CDMA), Wideband CDMA (WCDMA), a Universal Mobile Telecommunication System (UMTS), Wireless Broadband (WiBro), or Global System for Mobile Communications (GSM). The wired communication may include, for example, short-range communication 164. The short-range communication 164 may include, for example, at least one of WiFi, Bluetooth, NFC, MST, or Zigbee. The wired communication may include, for example, GNSS. Depending on a usage area or bandwidth, the GNSS may include, for example, at least one of a global positioning system (GPS), a global navigation satellite system (Glonass), a Beidou navigation satellite system ("Beidou"), and Galileo, and the European global satellite-based navigation system. Hereinbelow, "GPS" may be used interchangeably with "GNSS". The wired communication may include, for example, at least one of USB, a high definition multimedia interface (HDMI), recommended standard232 (RS-232), and a plain old telephone service (POTS). The network 162 may include a telecommunications network, for example, at least one of a computer network (e.g., a local area network (LAN) or a wide area network (WAN)), Internet, and a telephone network.

Each of the first external electronic device 102 and the second external electronic device 104 may be a device of the same type as or a different type than the electronic device 101. According to an embodiment of the present disclosure, the server 106 may include a group of one or more servers. According to various embodiments of the present disclosure, some or all of operations performed by the electronic device 101 may be performed in another electronic device or a plurality of electronic devices (e.g., the electronic device 102 or 104, or the server 106). According to an embodiment of the present disclosure, when the electronic device 101 has to perform a function or a service automatically or at a request, the electronic device 101 may request another device (e.g., the electronic devices 102 or 104 or the server 106) to perform at least some functions associated with the function or the service instead of or in addition to executing the function or the service. The another electronic device (e.g., the electronic device 102 or 104 or the server 106) may execute the requested function or additional function and deliver the execution result to the electronic device 101. The electronic device 101 may then process or further process the received result to provide the requested function or service. To that end, a cloud computing, distributed computing, or client-server computing technology may be used, for example.

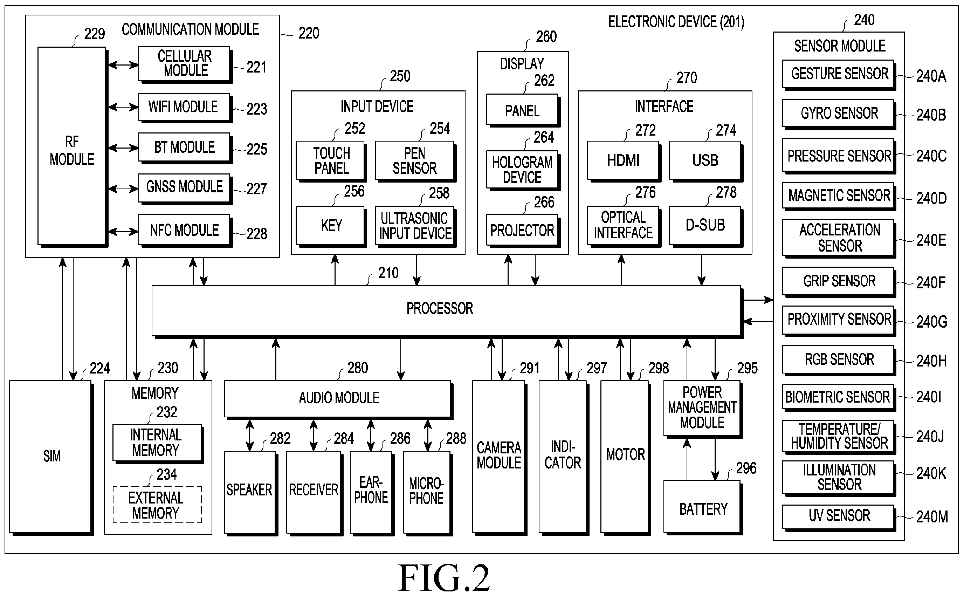

FIG. 2 is a block diagram of an electronic device 201 according to various embodiments of the present disclosure.

The electronic device 201 may form the entire electronic device 101 illustrated in FIG. 1 or a part of the electronic device 101 illustrated in FIG. 1. The electronic device 201 may include one or more processors (e.g., application processors (APs)) 210, a communication module 220, a subscriber identification module (SIM) 224, a memory 230, a sensor module 240, an input device 250, a display 260, an interface 270, an audio module 280, a camera module 291, a power management module 295, a battery 296, an indicator 297, and a motor 298.

The processor 210 controls multiple hardware or software components connected to the processor 210 by driving an Operating System (OS) or an application program, and performs processing and operations with respect to various data. The processor 210 may be implemented with, for example, a system on chip (SoC). According to an embodiment of the present disclosure, the server 210 may include a GPU and/or an image signal processor. The processor 210 may include at least some of the elements illustrated in FIG. 2 (e.g., the cellular module 221). The processor 210 loads a command or data received from at least one of other elements (e.g., a non-volatile memory) into a volatile memory to process the command or data, and stores various data in the non-volatile memory.

The communication module 220 may have a configuration that is the same as or similar to the communication interface 170 illustrated in FIG. 1. The communication module 220 may include, for example, at least one of the cellular module 221, a WiFi module 223, a Bluetooth (BT) module 225, a GNSS module 227 (e.g., a GPS module, a Glonass module, a Beidou module, or a Galileo module), an NFC module 228, and a radio frequency (RF) module 229.

The cellular module 221 may provide, for example, a voice call, a video call, a text service, or an Internet service over a communication network. According to an embodiment, the cellular module 221 identifies and authenticates the electronic device 201 in a communication network by using the SIM 224 (e.g., a SIM card). According to an embodiment, the cellular module 221 performs at least one of functions that may be provided by the processor 210. According to an embodiment, the cellular module 221 may include a communication processor (CP).

Each of the WiFi module 223, the BT module 225, the GNSS module 227, and the NFC module 228 may include, for example, a processor for processing data transmitted and received by a corresponding module. According to an embodiment, at least some (e.g., two or more) of the cellular module 221, the WiFi module 223, the BT module 225, the GNSS module 227, and the NFC module 228 may be included in one integrated chip (IC) or IC package.

The RF module 229 may, for example, transmit and receive a communication signal (e.g., an RF signal). The RF module 229 may include a transceiver, a power amp module (PAM), a frequency filter, a low noise amplifier (LNA), or an antenna. According to another embodiment, at least one of the cellular module 221, the WiFi module 223, the BT module 225, the GNSS module 227, and the NFC module 228 may transmit and receive an RF signal through the separate RF module.

The SIM 224 may include, for example, a card including a SIM and/or an embedded SIM, and may include unique identification information (e.g., an integrated circuit card identifier (ICCID) or subscriber information (e.g., an international mobile subscriber identity (IMSI)).

The memory 230 (e.g., the memory 130) may, for example, include an internal memory 232 and/or an external memory 234. The internal memory 232 may include, for example, at least one of a volatile memory (e.g., a dynamic random-access memory (DRAM), static RAM (SRAM), a synchronous dynamic RAM (SDRAM), etc.), and a non-volatile memory (e.g., one time programmable read only memory (OTPROM), programmable ROM (PROM), erasable and programmable ROM (EPROM), electrically erasable and programmable ROM (EEPROM), etc.), mask ROM, flash ROM, NAND flash memory, NOR flash memory, etc.), and a solid-state drive (SSD).

The external memory 234 may further include flash drive, for example, compact flash (CF), secure digital (SD), micro-SD, mini-SD, extreme Digital (xD), a multi-media card (MMC), or a memory stick. The external memory 234 may be functionally and/or physically connected with the electronic device 201 through various interfaces.

The sensor module 240 measures physical quantity or senses an operation state of the electronic device 201 to convert the measured or sensed information into an electric signal. The sensor module 240 may, for example, include at least one of a gesture sensor 240A, a gyro sensor 240B, a pressure sensor 240C, a magnetic sensor 240D, an acceleration sensor 240E, a grip sensor 240F, a proximity sensor 240G, a color sensor 240H (e.g., RGB sensor), a biometric sensor 240I, a temperature/humidity sensor 240J, an illumination sensor 240K, and a ultraviolet (UV) sensor 240M. Additionally or alternatively, the sensor module 240 may include an E-nose sensor (not shown), an electromyography (EMG) sensor (not shown), an electroencephalogram (EEG) sensor (not shown), an electrocardiogram (ECG) sensor (not shown), an infrared (IR) sensor, an iris sensor, and/or a fingerprint sensor. The sensor module 240 may further include a control circuit for controlling at least one sensor included therein. In some embodiment, the electronic device 201 may further include a processor configured to control the sensor module 240 as part of or separately from the processor 210, to control the sensor module 240 during a sleep state of the processor 210.

The input device 250 may include, for example, a touch panel 252, a (digital) pen sensor 254, a key 256, or an ultrasonic input device 258. The touch panel 252 may use at least one of a capacitive type, a resistive type, an IR type, or an ultrasonic type. The touch panel 252 may further include a control circuit. The touch panel 252 may further include a tactile layer to provide tactile reaction to the user. According to an embodiment, the touch panel 252 may include a pressure sensor (or a "force sensor", interchangeably used hereinafter) capable of measuring a strength of a pressure by a user's touch. The pressure sensor may be implemented integrally with the touch panel 252 or may be implemented as one or more sensors separate from the touch panel 252.

The (digital) pen sensor 254 may include a recognition sheet which is a part of the touch panel 252 or a separate recognition sheet. The key 256 may also include a physical button, an optical key, or a keypad. The ultrasonic input device 258 senses ultrasonic waves generated by an input means through a microphone (e.g., the microphone 288) and checks data corresponding to the sensed ultrasonic waves.

The display 260 (e.g., the display 160) may include a panel 262, a hologram device 264, or a projector 266. The panel 262 may have a configuration that is the same as or similar to the display 160 illustrated in FIG. 1. The panel 262 may be implemented to be flexible, transparent, or wearable. The panel 262 may be configured with the touch panel 252 in one module. The hologram device 264 shows a stereoscopic image in the air by using interference of light. The projector 266 displays an image onto a screen through projection of light. The screen may be positioned inside or outside the electronic device 201. According to an embodiment, the display 260 may further include a control circuit for controlling the panel 262, the hologram device 264, or the projector 266.

The interface 270 may include an HDMI 272, a universal serial bus (USB) 274, an optical communication 276, or a D-subminiature 278. The interface 270 may be included in the communication interface 170 illustrated in FIG. 1. Additionally or alternatively, the interface 270 may include, for example, a mobile high-definition link (MHL) interface, an SD card/MMC interface, or an Infrared Data Association (IrDA) standard interface.

The audio module 280 bi-directionally converts sound and an electric signal. At least one element of the audio module 280 may be included in the input/output interface 145 illustrated in FIG. 1. The audio module 280 processes sound information input or output through the speaker 282, the receiver 284, the earphone 286, or the microphone 288.

The camera module 291 is a device capable of capturing a still image or a moving image, and according to an embodiment, may include one or more image sensors (e.g., a front sensor or a rear sensor), a lens, an image signal processor (ISP), or a flash (e.g., an LED, a xenon lamp, etc.).

The power management module 295 manages power of the electronic device 201. The electronic device 201 may be, but not limited to, an electronic device supplied with power through a battery. According to an embodiment, the power management module 295 may include a power management integrated circuit (PMIC), a charger IC, or a battery fuel gauge. The PMIC may have a wired and/or wireless charging scheme. The wireless charging scheme includes a magnetic-resonance type, a magnetic induction type, and an electromagnetic type, and may further include an additional circuit for wireless charging, for example, a coil loop, a resonance circuit, or a rectifier. The battery gauge measures the remaining capacity of the battery 296 or the voltage, current, or temperature of the battery 296 during charging. The battery 296 may include, for example, a rechargeable battery and/or a solar battery.

The indicator 297 displays a particular state, for example, a booting state, a message state, or a charging state, of the electronic device 201 or a part thereof (e.g., the processor 210). The motor 298 converts an electric signal into mechanical vibration or generates vibration or a haptic effect. Although not shown, the electronic device 201 may include a processing device (e.g., a GPU) for supporting a mobile TV. The processing device for supporting the mobile TV processes media data according to, a standard such as digital multimedia broadcasting (DMB), digital video broadcasting (DVB), or mediaFlo™.

Each of the foregoing elements described herein may be configured with one or more components, names of which may vary with a type of the electronic device. In various embodiments, the electronic device may include at least one of the foregoing elements, some of which may be omitted or to which other elements may be added. In addition, some of the elements of the electronic device according to various embodiments may be integrated into one entity to perform functions of the corresponding elements in the same manner as before they are integrated.

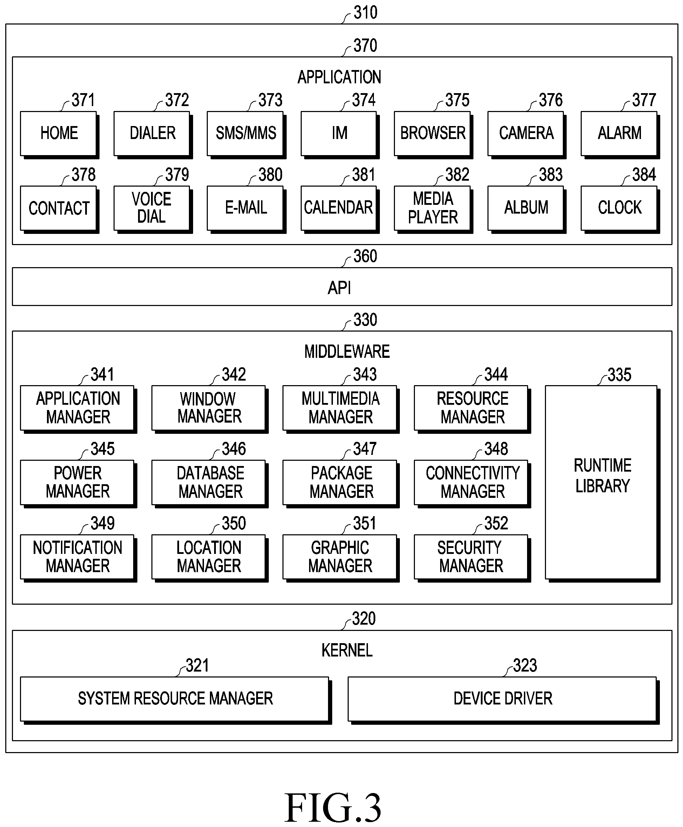

FIG. 3 is a block diagram of a programming module according to various embodiments.

According to an embodiment, a programming module 310 (e.g., the program 140) may include an OS for controlling resources associated with an electronic device (e.g., the electronic device 101) and/or various applications (e.g., the application program 147) executed on the OS. The OS may include Android™, iOS™, Windows™, Symbian™, Tizen™, or Samsung Bada OS™.

The programming module 310 may include, for example, a kernel 320, middleware 330, an application programming interface (API) 360, and/or an application 370. At least a part of the programming module 310 may be preloaded on an electronic device or may be downloaded from an external device (e.g., the vehicle device 102, the electronic device 104, or the server 106).

The kernel 320 (e.g., the kernel 141) may include, for example, a system resource manager 321 and/or a device driver 323. The system resource manager 321 may perform control, allocation, retrieval of system resources, and so forth. According to an embodiment, the system resource manager 321 may include a process management unit, a memory management unit, a file system management unit, and the like. The device driver 323 may include, for example, a display driver, a camera driver, a Bluetooth driver, a shared memory driver, a USB driver, a keypad driver, a WiFi driver, an audio driver, or an inter-process communication (IPC) driver.

The middleware 330 may include provide functions that the application 370 commonly requires or provide various functions to the application 370 through the API 360 to allow the application 370 to efficiently use a limited system resource in an electronic device. According to an embodiment, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module that a compiler uses to add a new function through a programming language while the application 370 is executed. The runtime library 335 performs functions related to an input/output, memory management, or calculation operation.

The application manager 341 manages a life cycle of at least one of the applications 370. The window manager 342 manages a GUI resource used on a screen. The multimedia manager 343 recognizes a format necessary for playing various media files and performs encoding or decoding with respect to a media file by using a codec appropriate to a corresponding format. The resource manager 344 manages a resource such as source code, a memory, or a storage space of at least one of the applications 370.

The power manager 345 manages a battery or power, for example, in operation with a basic input/output system (BIOS) and provides power information necessary for an operation of the electronic device. The database manager 346 performs a management operation to generate, search or change a database used for at least one application among the applications 370. The package manager 347 manages the installation or update of an application distributed in a package file format.

The connectivity manager 348 manages a wireless connection such as a WiFi or Bluetooth connection. The notification manager 349 displays or notifies events such as arrival messages, appointments, and proximity alerts in a manner that is not disruptive to a user. The location manager 350 manages location information of an electronic device. The graphic manager 351 manages a graphic effect to be provided to a user or a user interface relating thereto. The security manager 352 provides a general security function necessary for system security or user authentication. According to an embodiment, if the electronic device (e.g., the electronic device 101) has a call function, the middleware 330 may further include a telephony manager for managing a voice or video call function of the electronic device.

The middleware 330 may include a middleware module forming a combination of various functions of the above-mentioned internal elements. The middleware 330 may provide modules specified according to types of OS so as to provide distinctive functions. Additionally, the middleware 330 may delete some of existing elements or add new elements dynamically.

The API 360 (e.g., the API 145) may be provided as a set of API programming functions with a different configuration according to the OS. For example, in Android or iOS, one API set may be provided for each platform, and in Tizen, two or more API sets may be provided for each platform.

The application 370 (e.g., the application program 147) may include one or more applications capable of providing a function, for example, a home application 371, a dialer application 372, a short messaging service/multimedia messaging service (SMS/MMS) application 373, an instant message (IM) application 374, a browser application 375, a camera application 376, an alarm application 377, a contact application 378, a voice dial application 379, an e-mail application 380, a calendar application 381, a media player application 382, an album application 383, a clock application 384, a health care application (e.g., an application for measuring an exercise amount, a blood sugar, etc.), or an environment information providing application (e.g., an application for providing air pressure, humidity, or temperature information or the like).

According to an embodiment, the application 370 may include an application (hereinafter, an "information exchange application" for convenience) supporting information exchange between the electronic device (e.g., the electronic device 101) and an external electronic device (e.g., the electronic device 102 or 104). The information exchange application may include, for example, a notification relay application for transferring specific information to the external electronic device or a device management application for managing the external electronic device.

For example, the notification relay application may include a function for transferring notification information generated in another application (e.g., an SMS/MMS application, an e-mail application, a health care application, or an environment information application) of the electronic device to an external electronic device (e.g., the electronic device 102 or 104). The notification relay application may receive notification information from an external electronic device to provide the same to a user.

The device management application may manage (e.g., install, remove, or update) at least one function (e.g., turn on/turn off of an external electronic device itself (or a part thereof) or control of brightness (or resolution) of a display) of an external device (e.g., the electronic device 102 or 104) communicating with the electronic device, a service provided by an application operating in an external electronic device or provided by the external electronic device (e.g., a call service or a message service).

According to an embodiment, the application 370 may include an application (e.g., device health care application of mobile medical equipment) designated according to an attribute of the external electronic device (e.g., the electronic device 102 or 104). According to an embodiment, the application 370 may include an application received from the external electronic device (e.g., the server 106 or the electronic device 102 or 104). According to an embodiment, the application 370 may include a preloaded application or a third-party application that may be downloaded from the server. Names of elements of the programming module 310 according to the illustrated embodiment may vary depending on a type of an OS.

According to various embodiments, at least a part of the programming module 310 may be implemented by software, firmware, hardware, or a combination of at least two of them. The at least a part of the programming module 310 may be implemented (e.g., executed) by a processor (e.g., the processor 210). At least some of the programming module 310 may include, for example, modules, programs, routines, sets of instructions, or processes for performing one or more functions.

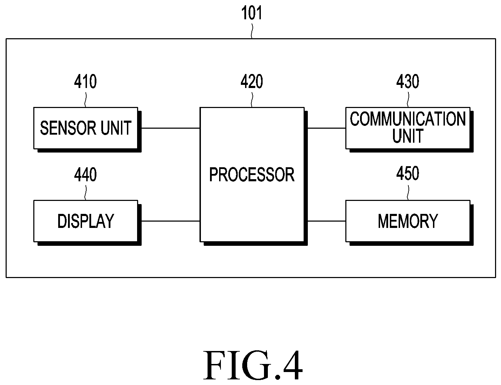

FIG. 4 is a block diagram of an electronic device for providing a payment service according to various embodiments of the present disclosure.

Referring to FIG. 4, the electronic device 101 may include at least one of a sensor unit 410, a communication unit 420, a display 440, a memory 450, and a processor 420.

According to various embodiments, the sensor unit 410 may perform at least one operation or function performed by the sensor module 240 of FIG. 2. The sensor unit 410 may include at least one sensor included in the sensor module 240 of FIG. 2. The sensor unit 410 may also include a fingerprint sensor for recognizing a fingerprint (not shown), the acceleration sensor 240E for sensing an acceleration, a sensor for sensing a pressure (not shown), a sensor having mounted thereon a camera function for recognizing a face of a user or an iris of an eye of the user, and the grip sensor 240G for sensing a grip of the electronic device 101. The pressure sensor may be configured together with the fingerprint sensor, and the electronic device 101 (e.g., the processor 420) may sense a pressure sensed on the fingerprint sensor while recognizing the fingerprint through the fingerprint sensor. The sensor unit 410 may sense, through at least one sensor, at least one of an action of removing the fingerprint from the fingerprint sensor of the electronic device 101, an action of adding a pressure to the fingerprint sensor, an action of releasing a grip of the electronic device 101, an action of moving the electronic device 101 to a second external electronic device 510 (e.g., a card reader), or an action of completing an input based on a discontinuous key input. The input based on the discontinuous key input may include at least one of an input through a biometric sensor for user's biometric authentication, another user input with respect to a designated object displayed on the display 440, an input for releasing the user input through the display 440, or an input based on a designated motion of the electronic device 101. The user input may include a touch on the sensor, fingerprint on the sensor, a pin number input, a grip of the electronic device 101, a pattern for the sensor, iris recognition with respect to the user, pressure recognition on the sensor, face recognition with respect to the user, or a combination thereof. The electronic device 101 (e.g., the processor 420) may sense input of a user's fingerprint, a pin number, a user's iris, a user's face from the user or a pressure applied by the user through at least one sensor included in the sensor unit 410 or the touch or pressure sensor included in the display 440. The electronic device 101 (e.g., the processor 420) may also sense a grip state of the electronic device 101 through at least one sensor included in the sensor unit 410.

According to various embodiments, the communication unit 420 may perform at least one operation or function performed by the communication interface 170 of FIG. 1. The communication unit 420 may include various communication circuits for providing communication with external electronic devices (e.g., a first external electronic device 520 and the second external electronic device 510). The communication unit 420 may communicate with at least one of the second external electronic device 510 (e.g., a card reader) for providing a payment service (e.g., payment information) and the first external electronic device 520 (e.g., a server). The communication unit 420 requests payment information or receives the payment information in response to a request through communication with the first external electronic device 520 (e.g., the server) by using the first communication circuit. The communication unit 420 outputs the received payment information to the second external electronic device 510 (e.g., the card reader) by using a second communication circuit. The communication unit 420 may include a circuit for communicating with the second external electronic device 510 (e.g., the card reader) based on magnetic secure transmission (MST) or near field communication (NFC). The MST may transmit credit card information by taking an electronic device including a loop antenna close to a magnetic payment terminal. The MST generates, in the electronic device 101, the same magnetic field as a magnetic field generated when the magnetic credit card contacts the magnetic payment terminal, thus wirelessly transmitting a payment means or method (e.g., credit card information) to a payment terminal. The NFC, one of radio frequency identification (RFID), is a contactless short-range wireless communication module using a frequency band of 13.56 MHz, and transmits data between the electronic device 101 and the second external electronic device 510 (e.g., the card reader) in a close distance of 10 cm, and has been used in various fields such as a payment service, travel information, traffics, access control, and so forth.

According to various embodiments, the display 440 may perform at least one operation or function performed by the display 160 of FIG. 1. The electronic device 101 (e.g., the processor 420) displays various information such as various information needed to make payment using the electronic device 101, information indicating a payment procedure, information indicating a payment result, information about a payment means (e.g., a card) for payment, and so forth, on the display 440. The display 440 may display a payment means (e.g., a card) selected for payment. The display 440 may include a sensor capable of recognizing a fingerprint. The display 440 may include a sensor capable of recognizing a pressure. The display 440 may sense (or receive) an input of another user with respect to a displayed object and an input for releasing the user input with respect to the display 440. The display 440 receives a user input based on a fingerprint, a pattern, or a pressure. The display 440 displays a driven timer upon sensing a completion event for completing a user's input, and displays a timer controlled corresponding to a touch input with respect to the displayed timer. The completion event may include at least one of an action of removing the fingerprint from the fingerprint sensor of the electronic device 101, an action of adding a pressure to the fingerprint sensor, an action of releasing a grip of the electronic device 101, an action of moving the electronic device 101 to a second external electronic device 510 (e.g., a card reader), or an action of completing an input based on a discontinuous key input. The user input may include various inputs made from the user to provide a payment service, and the completion event may include an event for stopping the user input.

According to various embodiments, the memory 450 may store data stored in the memory 130 of FIG. 1 and perform at least one operation or function performed by the memory 130. The memory 450 stores information about various cards input by the user. The memory 450 stores data transmitted and received through the communication unit 430, a processing result of the processor 420, various information or data displayed on the display 440, and a sensing result of the sensor unit 410.

According to various embodiments, the processor 420 may be configured to receive a user input by using at least one sensor of the sensor unit 410, to perform authentication with respect to the user input, to receive payment information from an external electronic device by using a first communication circuit of the communication unit 430 if the authentication is successful, and to output the payment information through a second communication circuit of the communication unit 430 upon receiving a completion event with respect to the user input from the sensor. The processor 420 senses a user input and a completion event with respect to the user input by using at least one sensor included in the sensor unit 410. The processor 420 senses a user input through a biometric sensor included in the sensor unit 410, and outputs the payment information to the second external electronic device 510 (e.g., the card reader) through the communication unit 430 upon sensing the completion event with respect to the sensed user input. The processor 420 senses a user input through a fingerprint sensor included in the electronic device 101 and senses a completion event with respect to the sensed user input. The fingerprint sensor is located on the exterior of the electronic device 101 and senses a pressure during fingerprint recognition.

According to various embodiments, the processor 420 may receive an input of another user with respect to a designated object displayed on the display 440 through a sensor included in the display 440 or an input for releasing the user input with respect to the display 440 as the completion event and output the payment information to the second external electronic device 510 (e.g., the card reader) through the communication unit 430. The display 440 senses a user input based on a pattern, a fingerprint, a pressure, or the like. The processor 420 identifies the designated motion of the electronic device 101 through a motion sensor included in the sensor unit 410, and if the designated motion satisfies a designated condition, the processor 420 receives the designated motion as the completion event and outputs the payment information to the second external electronic device 510 (e.g., the card reader) through the communication unit 430. The processor 420 senses a motion of the electronic device 101 through at least one sensor included in the sensor unit 410. For example, when the user moves the electronic device 101 to a position where the second electronic device 510 (e.g., the card reader) is located , while gripping the electronic device 101 (or a user input is maintained on the fingerprint sensor), the electronic device 101 (e.g., the processor 420) may sense the movement and recognize that the user attempts to make a payment.

According to various embodiments, the processor 420 performs authentication with respect to the user input, and if the authentication is successful, the processor 420 sends payment information to an external electronic device by using a first communication circuit included in the communication unit 430 and receives the payment information from the external electronic device. The received payment information may include token information for providing a payment service. The external electronic device may include the first external electronic device 520 (e.g., the server) provided by a credit card company, and upon receiving a request for payment information from the electronic device 101, generates one-time token information that may be paid through the electronic device 101, and transmits payment information including the generated token information to the electronic device 101. In the token information, an available time for a preset time (e.g., 3 minutes) is set. If the electronic device 101 (e.g., the processor 420) does not perform payment within the set time, the token information is automatically deleted or is not used for payment. The processor 420 compares the input user input with a previously stored user input and determines whether the user desiring to make a payment is an authorized user. The processor 420 may send a request for payment information to the external electronic device again, if the completion event is not sensed during the preset time after reception of the payment information.

According to various embodiments, the processor 420 is configured to output the payment information through the second communication circuit included in the communication unit 430, if sensing the completion event with respect to the user input from at least one sensor included in the sensor unit 410. The second communication circuit may include a communication circuit of an MST type. The processor 420 outputs payment information during a set time (e.g., 20 seconds), upon sensing the completion event. The processor 420 outputs payment information at least once during a set time (e.g., 20 seconds), upon sensing the completion event. The processor 420 activates the second communication circuit upon sensing the completion event, and displays, on the display 440, a pop-up indicating that the payment information is output. The pop-up may include various information for removing or non-contacting the electronic device 101 from the second external electronic device 510 (e.g., the card reader). The processor 420 outputs sound while displaying the pop-up. The processor 420 drives the timer to display the timer on the display 440, upon sensing the completion event. The processor 420 controls the driven timer in response to the input of a touch with respect to the displayed timer. The timer indicates the remaining time that may be increased or decreased by a touch. The timer is displayed on the display 440, together with the pop-up. After sensing the completion event, the processor 420 displays a restart button on the display 440 if the payment information is not output through the second communication circuit during a set time. The restart button may be a button for increasing a time for outputting the payment information. Through the restart button, the user may secure the time for outputting the payment information.

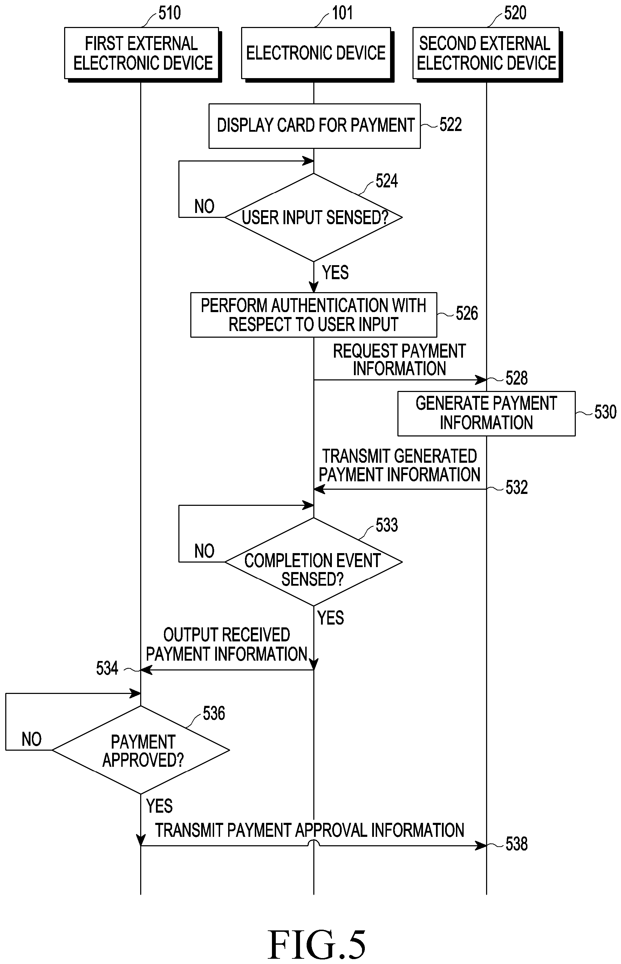

FIG. 5 is a flowchart illustrating a payment procedure in a payment system according to various embodiments of the present disclosure.

Hereinbelow, referring to FIG. 5, a detailed description will be made of a payment procedure in a payment system according to an embodiment of the present disclosure. The payment system according to various embodiments of the present disclosure may include the electronic device 101, the first external electronic device 520 (e.g., the server), and the second external electronic device 510.

In operation 522, the electronic device 101 (e.g., the processor 420) displays a payment means (e.g., a card) for payment on the display 440. The electronic device 101 (e.g., the processor 420) may display a payment means (e.g., a card) selected by the user for payment on the display 440. The memory 450 of the electronic device 101 stores information about various payment means (e.g., a card), such as various credit cards, discount cards, membership cards, or the like used for the payment. Once the payment means (e.g., the card) for payment is selected by the user, the electronic device 101 (e.g., the processor 420) may display the payment means (e.g., a card) selected by the user on the display 440. The electronic device 101 (e.g., the processor 420) may shade or block at least some information about the payment means (e.g., the card) to prevent another person close to the user from seeing the information about the payment means (e.g., the card), and display the information.

In operation 524, the electronic device 101 (e.g., the processor 420) determines whether the user input is sensed. For example, the user input may include a touch on the sensor, fingerprint recognition on the sensor, a pin number input, a grip of the electronic device 101, a pattern for the sensor, iris recognition with respect to the user, pressure recognition on the sensor, face recognition with respect to the user, or a combination thereof. The electronic device 101 (e.g., the processor 420) may sense input of a user's fingerprint, a pin number, a user's iris, a user's face from the user or a pressure applied by the user through at least one sensor included in the sensor unit 410 or the touch or pressure sensor included in the display 440. The sensor unit 410 may include the at least one sensor and the display 440. The display 440 may sense a user's fingerprint, a pin number, an iris, or a user's face input by the user or a pressure applied by the user. The electronic device 101 (e.g., the processor 420) may also sense a grip state of the electronic device 101 through at least one sensor included in the sensor unit 410. The sensor unit 410 of the electronic device 101 may include at least one of a fingerprint sensor for recognizing a fingerprint, an acceleration sensor for sensing an acceleration, a pressure sensor for sensing a pressure, a sensor having mounted therein a camera function for recognizing a face or an iris of an eye, and a grip sensor for recognizing a grip. The pressure sensor may be configured together with the fingerprint sensor, and the electronic device 101 (e.g., the processor 420) may sense a pressure sensed on the fingerprint sensor while recognizing the fingerprint through the fingerprint sensor. Upon sensing a user input, the electronic device 101 (e.g., the processor 420) performs authentication with respect to the user input in operation 526. The electronic device 101 (e.g., the processor 420) performs authentication with respect to a user input made through the at least one sensor. The electronic device 101 (e.g., the processor 420) compares the input user input with the user input previously stored in the memory 450 and determines whether the user desiring to make a payment is an authorized user. For example, the electronic device 101 (e.g., the processor 420) may obtain fingerprint information of a user by using the fingerprint sensor. For example, the electronic device 101 (e.g., the processor 420) may determine whether the fingerprint information is previously stored fingerprint information. If the obtained fingerprint information is identical to the previously stored fingerprint information, the electronic device 101 (e.g., the processor 420) determines that authentication with respect to the user is successful.

In operation 528, if authentication with respect to the user input is completed, the electronic device 101 (e.g., the processor 420) sends a request for payment information to the first external electronic device 520 (e.g., the server). The electronic device 101 (e.g., the processor 420) may request payment information through communication with the first external electronic device 520 (e.g., the server) by using the first communication circuit or may receive the payment information in response to the request through the communication unit 430. If authentication is completed, the electronic device 101 (e.g., the processor 420) generates information requesting the payment information and sends the generated information to the first external electronic device 520 (e.g., the server). The information requesting the payment information may include at least one of an identifier of the electronic device 101, the displayed card information, and user's information.

In operation 530, the first external electronic device 520 (e.g., the server) generates the payment information. Upon receiving a request for the payment information from the electronic device 101, the first external electronic device 520 (e.g., the server) generates the payment information based on at least one of the identifier of the electronic device 101 included in the received payment information, the displayed payment means information (e.g., card information), and the user's information. The first external electronic device 520 (e.g., the server) generates the payment information including a one-time token available during a preset time by using at least one of the identifier of the electronic device 101 received from the electronic device 101, the displayed payment means information (e.g., card information), and the user's information. The token may include information for a payment service, is available only during a preset time, and becomes unavailable after the elapse of the preset time.

In operation 532, the first external electronic device 520 (e.g., the server) transmits the generated payment information to the electronic device 101.

In operation 533, the electronic device 101 (e.g., the processor 420) senses the completion event with respect to the user input. The completion event may include at least one of an action of removing the fingerprint from the fingerprint sensor of the electronic device 101, an action of adding a pressure to the fingerprint sensor, an action of gripping the electronic device 101, an action of releasing the grip of the electronic device 101, an action of moving the electronic device 101 to a second external electronic device 510 (e.g., a card reader), or an action of completing an input based on a discontinuous key input. The input based on the discontinuous key input may include at least one of an input through a biometric sensor for user's biometric authentication, another user input with respect to a designated object displayed on the display 440, an input for releasing the user input through the display 440, or an input based on a designated motion of the electronic device 101.

In operation 534, the electronic device 101 (e.g., the processor 420) outputs the payment information received from the first external electronic device 520 (e.g., the server) to the second external electronic device 510 (e.g., the card reader). The electronic device 101 (e.g., the processor 420) outputs the payment information to the second external electronic device 510 (e.g., the card reader) by using a second communication circuit included in the communication unit 430. The electronic device 101 (e.g., the processor 420) outputs the payment information to the second external electronic device 510 (e.g., the card reader) by using MST or NFC included in the communication unit 420. The electronic device 101 (e.g., the processor 420) may receive an input of another user with respect to a designated object displayed on the display 440 through the display 440 or an input for releasing the user input with respect to the display 440 as the completion event and output the payment information to the second external electronic device 510 (e.g., the card reader) through the communication unit 430.

The electronic device 101 (e.g., the processor 420) outputs the payment information at least once during a set time (e.g., 20 seconds), upon sensing the completion event. The electronic device 101 (e.g., the processor 420) activates the second communication circuit upon sensing the completion event, and displays, on the display 440, a pop-up indicating that the payment information is output. The electronic device 101 (e.g., the processor 420) outputs sound while displaying the pop-up. The electronic device 101 (e.g., the processor 420) drives the timer to display the timer on the display 440, upon sensing the completion event. The electronic device 101 (e.g., the processor 420) controls the driven timer in response to the input of a touch with respect to the displayed timer. The timer is displayed on the display 440, together with the pop-up. After sensing the completion event, the electronic device 101 (e.g., the processor 420) displays a restart button on the display 440 if the payment information is not output through the second communication circuit during a set time. The restart button may be a button for increasing a time for outputting the payment information. Through the restart button, the user may secure the time for outputting the payment information.

In operation 536, the second external electronic device 510 (e.g., the card reader) receives the payment information from the electronic device 101 and determines whether to approve the payment.

In operation 538, the second external electronic device 510 (e.g., the card reader) transmits payment approval information to the first external electronic device 520 (e.g., the server). Once payment approval based on the token included in the payment information is performed, the second external electronic device 510 (e.g., the card reader) transmits the payment approval information to the first external electronic device 520 (e.g., the server). Once payment approval is performed, the second external electronic device 510 (e.g., the card reader) generates the payment approval information and transmits the generated payment approval information to a server of a credit card company.

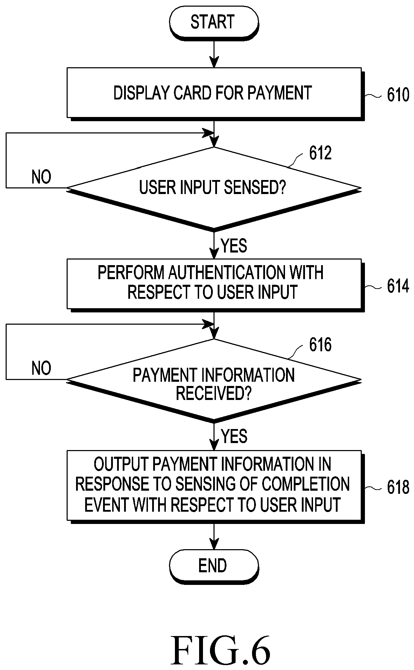

FIG. 6 is a flowchart illustrating a payment procedure in an electronic device according to various embodiments of the present disclosure.

Hereinbelow, referring to FIG. 6, a detailed description will be made of a payment procedure in an electronic device according to an embodiment of the present disclosure.

In operation 610, the electronic device 101 (e.g., the processor 420) displays a payment means (e.g., a card) for payment. The electronic device 101 (e.g., the processor 420) may display a payment means (e.g., a card) selected by the user for payment on the display 440. The memory 450 of the electronic device 101 stores information about various cards used for the payment, such as a credit card, a discount card, a membership card, or the like. Once the payment means (e.g., the card) for payment is selected by the user, the electronic device 101 (e.g., the processor 420) may display the payment means (e.g., a card) selected by the user on the display 440. The electronic device 101 (e.g., the processor 420) may shade or block at least some information about the card to prevent another person close to the user from seeing the information about the card, and then display the information on the display 440.

In operation 612, the electronic device 101 (e.g., the processor 420) senses a user input. The electronic device 101 (e.g., the processor 420) senses a user input through at least one of the at least one sensor included in the sensor unit 410 and the display 440. The user input may include a touch on the sensor, fingerprint recognition on the sensor, a pin number input, a grip of the electronic device 101, a pattern for the sensor, iris recognition with respect to the user, pressure recognition on the sensor, face recognition with respect to the user, or a combination thereof. The electronic device 101 (e.g., the processor 420) may sense input of a user's fingerprint, a pin number, a user's iris, a user's face from the user or a pressure applied by the user through at least one sensor included in the sensor unit 410 or the touch or pressure sensor included in the display 440. The electronic device 101 (e.g., the processor 420) may also sense a grip state of the electronic device 101 through at least one sensor included in the sensor unit 410. The sensor unit 410 of the electronic device 101 may include at least one of a fingerprint sensor for recognizing a fingerprint, an acceleration sensor for sensing an acceleration, a pressure sensor for sensing a pressure, a sensor having mounted therein a camera function for recognizing a face or an iris of an eye, and a grip sensor for recognizing a grip. The pressure sensor may be configured together with the fingerprint sensor, and the electronic device 101 (e.g., the processor 420) may sense a pressure sensed on the fingerprint sensor while recognizing the fingerprint through the fingerprint sensor.

Upon sensing a user input, the electronic device 101 (e.g., the processor 420) performs authentication with respect to the user input in operation 614. The electronic device 101 (e.g., the processor 420) performs authentication with respect to a user input made through the at least one sensor. The electronic device 101 (e.g., the processor 420) compares the input user input with the previously stored user input and determines whether the user desiring to make a payment is an authorized user.

If authentication with respect to the user input is completed, the electronic device 101 (e.g., the processor 420) sends a request for payment information to the first external electronic device 520 (e.g., the server). The electronic device 101 (e.g., the processor 420) may request payment information through communication with the first external electronic device 520 (e.g., the server) by using the first communication circuit or may receive the payment information in response to the request through the communication unit 430. If authentication is completed, the electronic device 101 (e.g., the processor 420) generates information requesting the payment information and sends the generated information to the first external electronic device 520 (e.g., the server). The information requesting the payment information may include at least one of an identifier of the electronic device 101, the displayed card information, and user's information.

In operation 616, the electronic device 101 (e.g., the processor 420) receives the payment information from the first external electronic device 520 (e.g., the server). The electronic device 101 (e.g., the processor 420) receives the payment information from the first external electronic device 520 (e.g., the server) in response to a request for the payment information. The request may include at least one of an identifier of the electronic device 101, the displayed card information, and user's information. The first external electronic device 520 (e.g., the server) generates payment information based on at least one of the identifier of the electronic device 101, the displayed card information, and the user's information and transmits the generated payment information to the electronic device 101. The generated payment information may include a one-time token available during a preset time. The token may include information for a payment service, is available only during a preset time, and becomes unavailable after the elapse of the preset time.

In operation 618, the electronic device 101 (e.g., the processor 420) outputs the payment information in response to sensing of the completion event with respect to the user input. The completion event may include at least one of an action of removing the fingerprint from the fingerprint sensor of the electronic device 101, an action of adding a pressure to the fingerprint sensor, an action of gripping the electronic device 101, an action of releasing the grip of the electronic device 101, an action of moving the electronic device 101 to a second external electronic device 510 (e.g., a card reader), or an action of completing an input based on a discontinuous key input. The input based on the discontinuous key input may include at least one of an input through a biometric sensor for user's biometric authentication, another user input with respect to a designated object displayed on the display 440, an input for releasing the user input through the display 440, or an input based on a designated motion of the electronic device 101. In response to sensing of the completion event with respect to the user input, the electronic device 101 (e.g., the processor 420) outputs the payment information received from the first external electronic device 520 (e.g., the server) to the second external electronic device 510 (e.g., the card reader). The electronic device 101 (e.g., the processor 420) outputs the payment information to the second external electronic device 510 (e.g., the card reader) by using a second communication circuit included in the communication unit 430. The electronic device 101 (e.g., the processor 420) outputs the payment information to the second external electronic device 510 (e.g., the card reader) by using MST or NFC included in the communication unit 420. The electronic device 101 (e.g., the processor 420) may receive an input of another user with respect to a designated object displayed on the display 440 through the sensor included in the display 440 or an input for releasing the user input with respect to the display 440 as the completion event and output the payment information to the second external electronic device 510 (e.g., the card reader) through the communication unit 430. Although sensing the completion event, the electronic device 101 (e.g., the processor 420) may not output the payment information to the second external electronic device 510 (e.g., the card reader).

The electronic device 101 (e.g., the processor 420) outputs the payment information at least once during a set time (e.g., 20 seconds), upon sensing the completion event. The electronic device 101 (e.g., the processor 420) activates the second communication circuit upon sensing the completion event, and displays, on the display 440, a pop-up indicating that the payment information is output. The electronic device 101 (e.g., the processor 420) outputs sound while displaying the pop-up. The electronic device 101 (e.g., the processor 420) drives the timer to display the timer on the display 440, upon sensing the completion event. The electronic device 101 (e.g., the processor 420) controls the driven timer in response to the input of a touch with respect to the displayed timer. The timer is displayed on the display 440, together with the pop-up. After sensing the completion event, the electronic device 101 (e.g., the processor 420) displays a restart button on the display 440 if the payment information is not output through the second communication circuit during a set time. The restart button may be a button for increasing a time for outputting the payment information. Through the restart button, the user may secure the time for outputting the payment information.

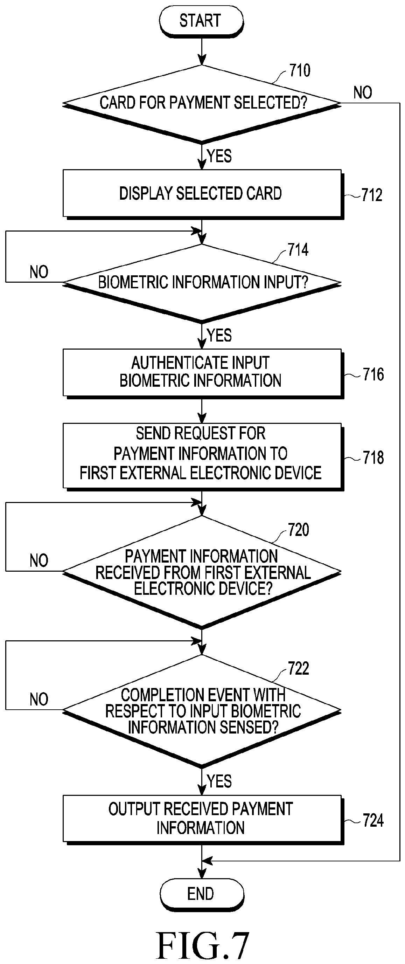

FIG. 7 is a flowchart illustrating a payment procedure using biometric information in an electronic device according to various embodiments of the present disclosure.

Hereinbelow, referring to FIG. 7, a detailed description will be made of a payment procedure in an electronic device according to an embodiment of the present disclosure.

Once a payment means (e.g., a card) for payment is selected by a user in operation 710, the electronic device 101 (e.g., the processor 420) displays the selected payment means (e.g., the card) in operation 712. The memory 450 of the electronic device 101 stores information about various cards used for the payment, such as a credit card, a discount card, a membership card, or the like. Once the payment means (e.g., the card) for payment is selected by the user, the electronic device 101 (e.g., the processor 420) may display the payment means (e.g., a card) selected by the user on the display 440. The electronic device 101 (e.g., the processor 420) may shade or block at least some information about the payment means (e.g., the card) to prevent another person close to the user from seeing the information about the payment means (e.g., the card), and display the information on the display 440.

The electronic device 101 (e.g., the processor 420) senses input of biometric information from the user in operation 714. The electronic device 101 (e.g., the processor 420) senses the input of the biometric information of the user through at least one of the at least one sensor included in the sensor unit 410 and the display 440. The biometric information may include at least one of a fingerprint, an iris, or a face. The sensor unit 410 of the electronic device 101 may include at least one of a fingerprint sensor for recognizing a fingerprint and a sensor having mounted therein a camera function for recognizing a face and an iris of an eye. The fingerprint sensor may be configured together with the pressure sensor, and the electronic device 101 (e.g., the processor 420) may sense a pressure sensed on the fingerprint sensor while recognizing the fingerprint through the fingerprint sensor.

Once sensing the input of the biometric information, the electronic device 101 (e.g., the processor 420) performs authentication with respect to the input biometric information in operation 716. The electronic device 101 (e.g., the processor 420) performs authentication with respect to a user input made through the at least one sensor. The electronic device 101 (e.g., the processor 420) compares the input biometric information with the previously stored biometric information and determines whether the user desiring to make a payment is an authorized user.

In operation 718, if the input biometric information is approved, the electronic device 101 (e.g., the processor 420) sends a request for payment information to the first external electronic device 520 (e.g., the server). The electronic device 101 (e.g., the processor 420) may request payment information through communication with the first external electronic device 520 (e.g., the server) by using the first communication circuit or may receive the payment information in response to the request through the communication unit 430. If authentication is completed, the electronic device 101 (e.g., the processor 420) generates information requesting the payment information and sends the generated information to the first external electronic device 520 (e.g., the server). The information requesting the payment information may include at least one of an identifier of the electronic device 101, the displayed card information, and user's information. The electronic device 101 (e.g., the processor 420) may also transmit the input biometric information to the first external electronic device 520 (e.g., the server).

The electronic device 101 (e.g., the processor 420) receives the payment information from the first external electronic device 520 (e.g., the server) in operation 720. The electronic device 101 (e.g., the processor 420) receives the payment information generated by the first external electronic device 520 (e.g., the server). Upon receiving the request for the payment information from the electronic device 101, the first external electronic device 520 (e.g., the server) generates the payment information based on at least one of the identifier of the electronic device 101 included in the received payment information, the displayed card information (e.g., card information), and the user's information. The first external electronic device 520 (e.g., the server) generates the payment information including a one-time token available within a preset time by using at least one of the identifier of the electronic device 101 received from the electronic device 101, the displayed card information, and the user's information. The token may include information for a payment service, is available only during a preset time, and becomes unavailable after the elapse of the preset time. If a response to the request for a preset time is not received after the payment information is requested, the electronic device 101 (e.g., the processor 420) may request again the payment information.

The electronic device 101 (e.g., the processor 420) senses the completion event with respect to the input biometric information in operation 722. The completion event may include at least one of an action of removing the fingerprint from the fingerprint sensor of the electronic device 101, an action of adding a pressure to the fingerprint sensor, an action of releasing the grip of the electronic device 101, an action of moving the electronic device 101 to a second external electronic device 510 (e.g., a card reader), or an action of completing an input based on a discontinuous key input. For iris recognition of an eye, the completion event may include a blink of an eyelid. The completion event may include at least one of an input through a biometric sensor for user's biometric authentication, anther user input with respect to a designated object displayed on the display 440, an input for releasing the input of the biometric information through the display 440, or an input based on a designated motion of the electronic device 101.

The electronic device 101 (e.g., the processor 420) outputs the payment information in response to sensing of the completion event with respect to the input of the biometric information in operation 724. The electronic device 101 (e.g., the processor 420) outputs the payment information to the second external electronic device 510 (e.g., the card reader) in response to the sensing of the completion event with respect to the input of the biometric information. The electronic device 101 (e.g., the processor 420) outputs the payment information to the second external electronic device 510 (e.g., the card reader) by using a second communication circuit included in the communication unit 430. The electronic device 101 (e.g., the processor 420) outputs the payment information to the second external electronic device 510 (e.g., the card reader) by using MST or NFC included in the communication unit 420. The electronic device 101 (e.g., the processor 420) may receive an input of another user with respect to a designated object displayed on the display 440 through the display 440 or an input for releasing the input of the biometric information with respect to the display 440 as the completion event and output the payment information to the second external electronic device 510 (e.g., the card reader) through the communication unit 430. The electronic device 101 (e.g., the processor 420) may not output the payment information to the second external electronic device 510 (e.g., the card reader), even if sensing the completion event.

The electronic device 101 (e.g., the processor 420) outputs the payment information at least once during a set time (e.g., 20 seconds), upon sensing the completion event. The electronic device 101 activates the second communication circuit upon sensing the completion event, and displays, on the display 440, a pop-up indicating that the payment information is output. The electronic device 101 outputs sound while displaying the pop-up. The electronic device 101 drives the timer to display the timer on the display 440, upon sensing the completion event. The electronic device 101 controls the driven timer in response to the input of a touch with respect to the displayed timer. The timer is displayed on the display 440, together with the pop-up. After sensing the completion event, the electronic device 101 displays a restart button on the display 440 if the payment information is not output through the second communication circuit during a set time. The restart button may be a button for increasing a time for outputting the payment information. Through the restart button, the user may secure the time for outputting the payment information.

According to various embodiments of the present disclosure, a method for an electronic device including a first communication circuit, a second communication circuit, a sensor, and a processor includes receiving a user input by using the sensor, performing authentication with respect to the user input, receiving payment information from an external electronic device by using the first communication circuit, when the authentication is successful, and outputting the payment information through the second communication circuit, upon receiving a completion event with respect to the user input from the sensor, by using the processor.

According to an embodiment, the method may further include outputting the payment information upon receiving, as the completion event, an input of releasing a user input with respect to the sensor.

According to an embodiment, the method may further include receiving, as the completion event, another user input with respect to a designated object displayed on the display or an input of releasing the user input with respect to the display and outputting the payment information.

According to an embodiment, the method may further include identifying a designated motion of the electronic device by using a motion sensor included in the sensor and receiving, as the completion event, the designated motion when the designated motion satisfies a designated condition, and outputting the payment information.

According to an embodiment, the method may further include avoiding transmitting the payment information if the completion event with respect to the user input is not received.

According to an embodiment, the method may further include receiving token information for payment from the external electronic device by using the first communication circuit, when the authentication is successful.

According to an embodiment, the method may further include displaying a payment means selected for payment.

According to an embodiment, the method may further include transmitting a request for re-receiving the payment information to the external electronic device, if the completion event is not received during a preset time.

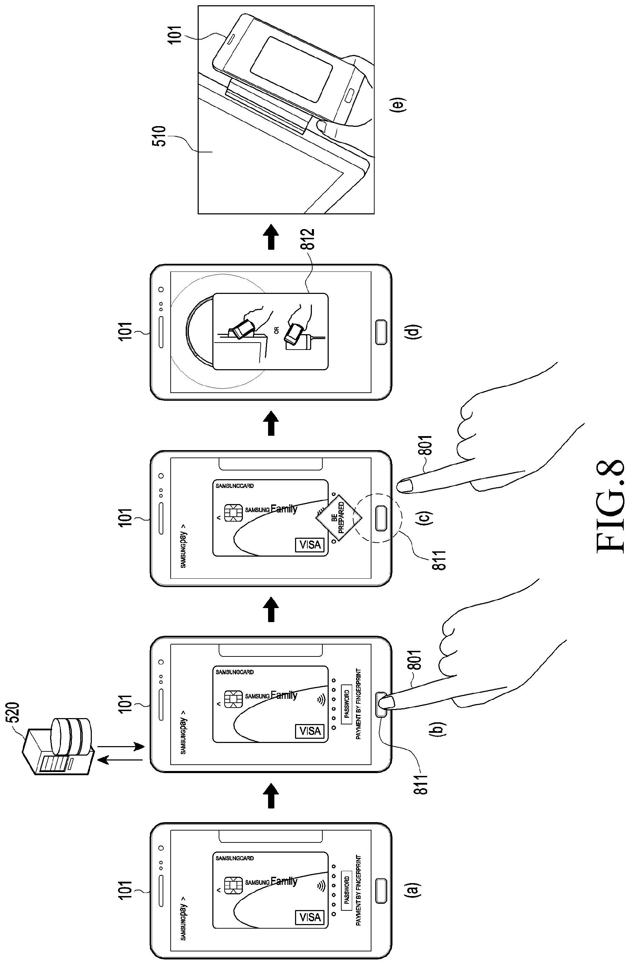

FIG. 8 is an exemplary diagram showing a payment procedure using biometric information according to an embodiment of the present disclosure, in which (a) of FIG. 8 is an exemplary diagram showing a card to be used for payment according to an embodiment of the present disclosure, (b) of FIG. 8 is an exemplary diagram showing input of biometric information according to an embodiment of the present disclosure, (c) of FIG. 8 is an exemplary diagram showing occurrence of a completion event with respect to input of biometric information according to an embodiment of the present disclosure, (d) of FIG. 8 is an exemplary diagram showing a pop-up indicating output of payment information corresponding to a completion event according to an embodiment of the present disclosure, and (e) of FIG. 8 is an exemplary diagram showing that an electronic device is removed from or does not contact a second external electronic device (e.g., a card reader) according to an embodiment of the present disclosure.

Referring to (a) of FIG. 8, the electronic device 101 (e.g., the processor 420) displays a payment means (e.g., a card) for payment. The electronic device 101 (e.g., the processor 420) displays various cards having a payment function such as a credit card, a discount card, a membership card, and so forth, on the display 440, and receives, from a user, selection of at least one payment means (e.g., a card) from among the displayed various payment means (e.g., cards). The electronic device 101 (e.g., the processor 420) may display the selected payment means (e.g., card) on the display 440. The electronic device 101 (e.g., the processor 420) may shade or block at least some information about the card to prevent another person close to the user from seeing the information about the card, and then display the information on the display 440.

Referring to (b) of FIG. 8, the electronic device 101 (e.g., the processor 420) may receive a user input from the user while displaying the payment means (e.g., the card). The electronic device 101 (e.g., the processor 420) may also receive a user input or biometric information by activating the at least one sensor included in the sensor 410. The electronic device 101 (e.g., the processor 420) may also receive the user input or the biometric information through at least some region of the display 440. For example, the electronic device 101 (e.g., the processor 420) may receive the user's biometric information through a fingerprint sensor 811. The user may perform an input operation with respect to the electronic device 101 by continuously touching or by pressing the fingerprint sensor 811, and the electronic device 101 (e.g., the processor 420) may not communicate with the second external electronic device 510 (e.g., the card reader) based on MST or NFC during the input of the biometric information. Upon the input of the biometric information, the electronic device 101 (e.g., the processor 420) sends a request for payment information to the first external electronic device 520 (e.g., the server) and receives the payment information from the first external electronic device 520 (e.g., the server) in response to the request. The first external electronic device 101 (e.g., the server) generates the request for the payment information including at least one of the identifier of the electronic device 101, the displayed card information, and the user's information and transmits the generated request to the first external electronic device 520 (e.g., the server). The electronic device 101 (e.g., the processor 420) receives the payment information including a one-time token available within a preset time (e.g., 3 minutes) from the first external electronic device 520 (e.g., the server) by using at least one of the identifier of the electronic device 101, the displayed card information, and the user's information. The token may include information for a payment service, is available only during a preset time, and becomes unavailable after the elapse of the preset time (e.g., 3 minutes). The first external electronic device 520 (e.g., the server) transmits the generated payment information through the electronic device 101.

Referring to (c) of FIG. 8, the electronic device 101 (e.g., the processor 420) senses the completion event with respect to the input biometric information. The electronic device 101 (e.g., the processor 420) senses removal of a finger 810 sensed on the fingerprint sensor 811. The completion event may include at least one of an action of removing the fingerprint from the fingerprint sensor of the electronic device 101, an action of adding a pressure to the fingerprint sensor, an action of releasing the grip of the electronic device 101, an action of moving the electronic device 101 to a second external electronic device 510 (e.g., a card reader), or an action of completing an input based on a discontinuous key input. For iris recognition of an eye, the completion event may include a blink of an eyelid.

Referring to (d) and (e) of FIG. 8, the electronic device 101 (e.g., the processor 420) outputs the payment information to the second external electronic device 510 (e.g., the card reader) through the communication unit 430 in response to the sensing of the completion event with respect to the input of the biometric information. The electronic device 101 (e.g., the processor 420) outputs the payment information to the second external electronic device 510 (e.g., the card reader) by using a second communication circuit included in the communication unit 430. The electronic device 101 (e.g., the processor 420) outputs the payment information to the second external electronic device 510 (e.g., the card reader) by using MST or NFC included in the communication unit 420. The electronic device 101 (e.g., the processor 420) may receive an input of another user with respect to a designated object displayed on the display 440 through the display 440 or an input for releasing the input of the biometric information with respect to the display 440 as the completion event and output the payment information to the second external electronic device 510 (e.g., the card reader) through the communication unit 430. The electronic device 101 (e.g., the processor 420) activates the second communication circuit upon sensing the completion event, and displays, on the display 440, a pop-up 812 indicating that the payment information is output. The pop-up 812 may include a notification indicating removal of the electronic device 101 from the second external electronic device 510 (e.g., the card reader), and the notification may include a character, a picture, or a moving image. The electronic device 101 (e.g., the processor 420) outputs sound while displaying the pop-up 812. The electronic device 101 (e.g., the processor 420) drives a timer 813 to display the timer on the display 440, upon sensing the completion event. The electronic device 101 (e.g., the processor 420) controls the driven timer 813 in response to the input of a touch with respect to the displayed timer. The timer 813, together with the pop-up 812, may be displayed on the display 440.

FIG. 9 is an exemplary diagram showing control of a timer after sensing of a completion event according to an embodiment of the present disclosure.

Referring to FIG. 9, the electronic device 101 (e.g., the processor 420) may not output the payment information to the second external electronic device 510 (e.g., the card reader), upon sensing the completion event. The electronic device 101 (e.g., the processor 420) outputs the payment information to the second external electronic device 510 (e.g., the card reader) by using MST or NFC included in the communication unit 420. The electronic device 101 (e.g., the processor 420) displays, on the display 440, a pop-up 912 indicating that the payment information is output. The pop-up 912 may include a notification indicating removal of the electronic device 101 from the second external electronic device 510 (e.g., the card reader), and the notification may include a character, a picture, or a moving image. For example, if a user touches the timer 813 displayed on the display 440 by a finger and moves the finger from 913 to 914, then the timer may be driven again in a position where the finger is situated. The timer may reduce or increase a non-contact time with the second external electronic device 510 (e.g., the card reader).

FIG. 10 is an exemplary diagram showing that an electronic device does not contact a second external electronic device (e.g., a card reader) according to an embodiment of the present disclosure.

Referring to FIG. 10, the electronic device 101 (e.g., the processor 420) outputs the payment information to the second external electronic device 510 (e.g., the card reader) in response to the sensing of the completion event with respect to the input of the biometric information. The electronic device 101 (e.g., the processor 420) may not output the payment information, even if sensing the completion event. In this case, after sensing the completion event, the electronic device 101 may sense an approach of the electronic device 101 to the second external electronic device 510 (e.g., the card reader) by using at least one of the gesture sensor 240A, the gyro sensor 240B, the acceleration sensor 240E, the grip sensor 240F, and a motion sensor (not shown) included in the sensor unit 410. The electronic device 101 (e.g., the processor 420) outputs the payment information, upon sensing the approach to the second external electronic device 510 (e.g., the card reader) through the at least one sensor.

A term "module" used herein may mean, for example, a unit including one of or a combination of two or more of hardware, software, and firmware. The "module" may be interchangeably used with a unit, a logic, a logical block, a component, or a circuit. The "module" may be a minimum unit or a portion of an integrated component. The "module" may be a minimum unit or part thereof, adapted to perform one or more functions. The "module" may be implemented mechanically or electronically. For example, the "module" according to the present disclosure may include at least one of an application-specific integrated circuit (ASIC) chip, field-programmable gate arrays (FPGAs), and a programmable-logic device performing certain operations already known or to be developed.

At least a part of a device (e.g., modules or functions thereof) or a method (e.g., operations) according to various embodiments may be implemented with a command stored in a computer-readable storage medium in the form of a programming module. When the instructions are executed by a control circuit, the control circuit may perform functions corresponding to the instructions. The computer-readable storage medium may be, for example, a memory included in the memory 360. At least a part of the programming module may be implemented (for example, executed) by the control circuit At least some of the programming modules may include, for example, modules, programs, routines, sets of instructions, or processes for performing one or more functions.

The computer readable recording medium includes magnetic optical media such as compact disc read only memory (CD-ROM) or digital versatile disc (DVD), magneto-optical media such as floptical disk, and a hardware device such as ROM, RAM, flash memory storing and executing program commands. Further, the program instructions include a machine language code created by a complier and a high-level language code executable by a computer using an interpreter. The foregoing hardware device may be configured to be operated as at least one software module to perform an operation of the present disclosure, or vice versa.

Modules or programming modules according to the present disclosure may include one or more of the foregoing elements, have some of the foregoing elements omitted, or further include additional other elements. Operations performed by the modules, the programming modules or other elements according to the present disclosure may be executed in a sequential, parallel, repetitive or heuristic manner. Also, some of the operations may be executed in different order or omitted, or may have additional different operations. According to various embodiments, a storage medium has stored therein instructions which may include a first instruction set for receiving a user input, a second instruction for performing authentication with respect to the user input, a third instruction for receiving payment information from an external electronic device by using the first communication circuit, when the authentication is successful, and a fourth instruction for outputting the payment information through the second communication circuit, upon receiving a completion event with respect to the user input from the sensor.

The embodiments disclosed in the present specification and drawings have been provided to easily describe the present disclosure and to help understanding of the present disclosure, and are not intended to limit the scope of the present disclosure. Therefore, it should be construed that the scope of the present disclosure includes any change or other various embodiments based on the technical spirit of the present disclosure as well as the embodiments described herein.

## Claims

1. An electronic device comprising:
a sensor;
a first communication circuit;
a second communication circuit; and
a processor,
wherein the processor is configured to:
receive a user input by using the sensor;
perform authentication with respect to the user input;
receive payment information from an external electronic device by using the first communication circuit, when the authentication is successful; and
output the payment information through the second communication circuit, upon receiving a completion event with respect to the user input from the sensor.

2. The electronic device of claim 1, wherein the sensor comprises a biometric sensor for biometric authentication, and
the processor is further configured to output the payment information upon receiving, as the completion event, an input of releasing a user input with respect to the biometric sensor.

3. The electronic device of claim 1, wherein the sensor comprises a display, and
the processor is further configured to receive, as the completion event, another user input with respect to a designated object displayed on the display or an input of releasing the user input with respect to the display and output the payment information.

4. The electronic device of claim 1, wherein the sensor comprises a motion sensor, and
the processor is further configured to:
identify a designated motion of the electronic device by using the motion sensor; and
receive, as the completion event, the designated motion when the designated motion satisfies a designated condition, and output the payment information.

5. The electronic device of claim 1, wherein the second communication circuit comprises a communication circuit of a magnetic secure transmission (MST) type.

6. The electronic device of claim 1, wherein the processor is further configured to avoid transmitting the payment information if the completion event with respect to the user input is not received.

7. The electronic device of claim 1, wherein the user input comprises a touch on the sensor, fingerprint recognition on the sensor, a pin number input, a grip of the electronic device, a pattern for the sensor, iris recognition with respect to a user, pressure recognition on the sensor, face recognition with respect to the user, or a combination thereof.

8. The electronic device of claim 1, wherein the processor is further configured to receive token information for payment from the external electronic device by using the first communication circuit, when the authentication is successful.

9. The electronic device of claim 1, further comprising a display configured to display a payment means selected for payment.

10. The electronic device of claim 9, wherein the processor is further configured to:
activate the second communication circuit upon sensing the completion event; and
display, through the display, a pop-up indicating that the payment information is output.

11. The electronic device of claim 1, wherein the processor is further configured to transmit a request for re-receiving the payment information to the external electronic device, if the completion event is not received during a preset time.

12. A method for an electronic device comprising a first communication circuit, a second communication circuit, a sensor, and a processor, the method comprising:
receiving a user input by using the sensor;
performing authentication with respect to the user input;
receiving payment information from an external electronic device by using the first communication circuit, when the authentication is successful; and
outputting the payment information through the second communication circuit, upon receiving a completion event with respect to the user input from the sensor, by using the processor.

13. The method of claim 12, further comprises outputting the payment information upon receiving, as the completion event, an input of releasing a user input with respect to the sensor.

14. The method of claim 12, further comprises receiving, as the completion event, another user input with respect to a designated object displayed on the display or an input of releasing the user input with respect to the display and outputting the payment information.

15. The method of claim 12, further comprises:
identifying a designated motion of the electronic device by using a motion sensor included in the sensor; and
receiving, as the completion event, the designated motion when the designated motion satisfies a designated condition, and outputting the payment information.
